Europäisches Patentamt

European Patent Office

Office européen des brevets

(11) Publication number: **0 119 728**
**B1**

# EUROPEAN PATENT SPECIFICATION

(45) Date of publication of patent specification: **06.05.87**

(51) Int. Cl.⁴: **C 09 D 11/00**

(21) Application number: **84300917.6**

(22) Date of filing: **14.02.84**

(54) **Ink jet printing ink containing iodine and potassium iodide.**

(30) Priority: **15.02.83 US 467001**

(43) Date of publication of application:
**26.09.84 Bulletin 84/39**

(45) Publication of the grant of the patent:
**06.05.87 Bulletin 87/19**

(84) Designated Contracting States:
**BE DE FR GB NL SE**

(56) References cited:

CHEMICAL ABSTRACTS, vol. 96, 1982, page
107, no. 54053v, Columbus, Ohio, USA;
CHEMICAL ABSTRACTS, vol. 88, 1978, page
111, no. 172091p, Columbus, Ohio, USA;

(73) Proprietor: **BURROUGHS CORPORATION (a
Delaware corporation)**
**Burroughs Place**
**Detroit Michigan 48232 (US)**

(72) Inventor: **Strem, Joseph G.**
**2727 W. Oak Ridge Road**
**2-5 Orlando Florida 32809 (US)**
Inventor: **Allred, Donald R.**
**8439 Bay Oak Court**
**Orlando Florida 32810 (US)**

(74) Representative: **Kirby, Harold Douglas Benson
et al**
**G.F. Redfern & Company Marlborough Lodge 14
Farncombe Road**
**Worthing West Sussex BN11 2BT (GB)**

Courier Press, Leamington Spa, England.

## 0 119 728

**Description**

The present invention relates to printing inks, and more particularly to a new and improved printing ink for use in ink jet printing apparatus.

Certain problems attendant to ink jet printing apparatus have caused the industry to constantly experiment to develop an extremely fast, efficient, reliable and quiet ink jet printing system. One such problem is ink penetration of the paper item so as to produce a clear, crisp, clean, sharp copy such as is normally expected from a standard impact printer. Where penetration is low; blotting, smearing, and smudging are readily apparent.

Another problem associated with ink jet printing is the clogging of the miniscule ink jet orifices due to the viscosity of the ink. This causes stoppages in work flow and necessitates the use of costly solvents and the time consuming task of cleaning each ink jet where multiple jets are employed.

Common bond and cotton filled papers have a relatively high starch content which is ordinarily utilized as a binder material for the paper fibers. This is in contrast to the speciality papers which do not employ starch as a binder and which are generally a much flimsier paper in terms of handling and durability. Although generally they are highly ink absorbent and thus receive most inks without problems.

Unfortunately, when ordinary inks are employed with non speciality papers such as the common bond and cotton filled papers the inks penetrate the papers staining the internal fibers but leave the external fibers white. Thus, the print quality and legibility is extremely poor and generally quite unusable. This reaction results from the high starch content of the papers. In addition the inks used tended to spread and refuse to produce a clean, crisp clear spot or dot on the paper.

It is an important object therefore of the present invention to produce an ink or inks which will stain or mark a starch content paper. (Xerographic papers, bond papers, cotton filled papers all have a high starch content).

It is also an object of this invention to provide an ink which will mark or stain high starch content papers yet will be of suitable viscosity for use in ink jet printing apparatus.

It has been suggested to use acid to dissolve away a little starch so as to cause the fibers to be exposed then, stain the exposed fiber. However, the mechanical system of the ink jet will not tolerate the acid content of the ink. It is also suggested to provide a reactive mixture in the ink which would cause a chemical reaction to neutralize the starch but this required an involved chemical formulation for the ink to be practical.

In the known prior art, for example, patent 4,176,361 which relates to ink jet printing generally and specifically to an "ink composition for ink jet printing" describes an aqueous ink composition comprising 2—12% by weight of a water-soluble dye, 35—80% by weight of duly hydric alcohol containing from 2—6 carbon atoms, and water. While this formulation may be compositionally good, the ink will not adequately color highly starched fibers. Also a preservative/bacteriocide is required to prevent bacteria growth.

Patent 4,142,905 relates to a "waterless ink for non-impact jet printers" consisting of:

| | |
|---|---|
| Ethylene glycol: | 89—93% by weight |
| Sodium nitrite: | 3—6% by weight |
| Nigrosine black dye, water soluble: | 3—6% by weight |

Although the glycol is a good wetting agent the formulation does not provide good coloring on office papers of high starch content.

Patent 3,705,043 relates to "Infrared Absorptive Jet Printing Ink Composition" consisting of:

| | |
|---|---|
| Calcocid black (American Cyanamid) | 2.0% by weight |
| water dispersed carbon black (aquablack-Columbia Carbon)—dry basis | 0.5% by weight |
| Polyethylene glycol (Ac. MW 200) (carbowax 200) | 15.0% by weight |
| Water | 80.5% by weight |

While this formulation provides a useful ink jet printing ink it cannot function adequately to color high starch content papers and does not employ a bacteriocide or preservative.

Patent 3,870,528 relates to an "Infrared and Visible Dual Dye Jet Printer Ink" which employs an absorptive ink in the infrared range consists of:

| | |
|---|---|
| Nigrosine W5B (acid black@) | 2.0% by weight |
| Carbowax 1500 | 2.0% by weight |
| Butyl carbitol | 0.5% by weight |
| Distilled water (including 0.1% concentration of sodium omadine) | 88.5% by weight |
| Phenamine black rw concentrate (c120245 or direct black 4) | 4.0% by weight |
| methyl 2 pyrrolidone | 3.0% by weight |

Although the sodium omadine is stated to act as fungicide or anti-bacterial agent no additional coloring of the high starch content of the "office papers" is provided.

Patent 3,776,742 relates to a "Non-Coloring Conductive Ink" consisting of:

| | |
|---|---|
| dye sulfo rhodamine B (red color) | 0.25% by weight |
| salt calcium chloride | 5% by weight |
| polyol ethylene glycol | 10% by weight |
| organic crystalline material ethylene urea | 10% by weight |
| water | balance |

Good printability on high starch papers is questionable as is the absence of a fungicide or bacteriocide.

Patent 3,846,141 relates to "Jet Printing Ink Composition" in which various humectants are described and claimed. Although dioxin is referred to and incorporated in the formulation there is no mention of a capability of dyeing a high starch paper.

The present invention provides a new and improved ink composition for use in ink jet printing of paper having a high starch content comprising a solution of iodine and potassium iodide in a solvent, a colourant also soluble in said solvent, and, a viscosity enhancing and wetting agent. It has been determined that printing inks formulated in accordance with this invention have the desired viscosity for use in jet printing and that the ink is useful with the generally available starch based papers producing clean, clear, crisp black copy.

The new ink provided by this invention has a number of important advantages over prior art ink formulations.

Increased *optical density* of printed dot, achieved by the sum of tinctorial effects of dye on cellulose and $KI + I_2$ starch sizing reaction.

*Omission of bacteriocide,* algaecide, due to relatively high iodine concentration.

*Easy filterability* for lack of polymer addition to ink.

*Good printability* on high cotton containing and heavily sized office bond papers.

*Increased* water and light *permanency* compared to direct dye(s)-containing inks.

Generally available commercial inks as applied to commercially available papers (the majority of the latter having high starch content), when employed in an ink jet printing environment produce less than desirable copy. The printing suffers from low density, nonuniformity and lack of crispness or sharpness.

It has been observed with respect to these papers, that the ink is received into the paper to stain the interior or internal fibers but the exterior surface of the paper remains unstained. This is a direct result of the high starch content of the paper and inability of the commercial inks to color or stain the starched fibers. Starch makes the paper hydrophobic so that when the ink drop strikes the paper it is repelled by the starch and the external fibers are not stained whereas the internal fibers take up the color of the ink due to the lowered starch content. The ink also has a tendency to spread and refuse to produce a clear regularly formed dot or spot.

The following is an example of an ink formulation in accordance with the present invention.

3

0 119 728

Example I

|  | Temp | Chemicals | | |
|---|---|---|---|---|
| Weight out | room | Solution (3.2% $I_2$ and 9.6% KI with $H_2O$) | ml | 300 |
|  |  | (Elemental Iodine $I_2$ and solid KI salt) Ethylene glycol | ml | 400 |
|  |  | Pontamine Black SP—1 liquid | ml | 300 |
|  |  | Total | ml | 1,000 |
|  | room | Stirring mixer | . | 4 hours |
| Filter | room | Millipore disc filtering system | | |
|  |  | Prefilter mitec telfon, LC, | | 10 microns |
|  |  | Prefilter mitec telfon, LS | | 5 microns |
| Liquid Q.C. | room | Resistivity $-\Omega cm$ | | 100 |
|  |  | Spec. gravity (density) $g/cm^3$ | | 1.114 |
|  |  | Viscosity Pa · s | | $6.3 \times 10^{-3}$ |
|  |  | Surface tension Dynes/cm | | 46.5 |
|  |  | pH—adjust to 7.5+0.1 units | | 7.6 |
|  |  | Total solids @ 110°C g/g% | | 17.6 |
| O.D. by draw down | room | Five drops #12 meyer rod | | . |
|  |  | Papers: Xerox 4023DP—control | | 1.47 |
|  |  | Burroughs #3011135 | | 1.42 |
|  |  | 25% cotton erasable | | 1.45 |
|  |  | 25% cotton office bond | | 1.48 |
|  |  | Savin copier paper | | 1.48 |

(as measured on MacBeth Densitometer)

The ink formulation (Example I) is described in relation to an ink "on demand" system in which the ink is pulsed as needed.

Section 1 labeled "chemicals" comprises the formula for the novel ink formulation; the starting solution used is 3.2% $I_2$ and 9.6% KI and 87.2% $H_2O$. 300 ml of this solution is mixed at *room temperature* with 400 ml of ethylene glycol and 300 ml of Pontamine Black SP-1 (a commercially liquid dye) to produce a total of 1000 mls. Thereafter the "mix" is placed in a stirring mixer and again mixed for 4 hours at room temperature to insure uniform stability.

Section 2 is the filter section.

The stirred "mix" is next filtered down to 5 (microns) through a millipore disc filtering system. This step removes any ink conglomerates, coagulates that might tend to cause blockage within the nozzle of the ink jet printing system (25—40 microns ink jet nozzle). The filters include a 10 micron and a 5 micron "Mitex" millipore filter.

Section 3 covers the liquid quality control for the present formulation.

Resistivity in ohms—centimeter $(\Omega \cdot cm)$—100.

Specific gravity (which technically has no units) but realistically is taken as density in grams per cubic centimeter or grams per mil)—1.114.

4

viscosity in Pa · s—6.3×10⁻³ → $6.3 \times 10^{-3}$

viscosity in Pa · s—$6.3 \times 10^{-3}$

surface tension in dynes per centimeter—46.5

pH factor—7.6

total solids—baking off solvents @ 110°C for 24 hours (gram/gram %)—17.7 remaining out of total).

Section 4 optical density by draw down utilizing a number 12 Meyer Rod and 5 drops of the ink formulation. The optical density is measured at room temperature on a Macbeth densitometer and compared to a standard density unit varying from 1.3 to 1.38 (for a non-iodine-containing ink formulation).

. The test results set forth in Section 4 demonstrate quite clearly that the iodine—potassium iodide formulation does indeed produce a significant and dramatic increase in optical density over the so called standard. What is even more noticeable and significant is that the combination herein described and claimed ($I_2 + KI_3$ radical ion combination) reacts with the starch in the paper to produce an organic complex that has a very deep blue color. Providing a clean, crisp clear spot for printing as desired.

The following ink formulations are useful, in ink jet printing environments.

Example II

|  | Temp | Chemicals | | |
|---|---|---|---|---|
| Weight out | room | *Solvent | ml | 80 |
|  |  | +Dye |  | 38 |
|  |  | **Isopropanol—(approx.) | ml | 8 |
|  |  | KI | g | 6 |
|  |  | $I_2$ | g | 1.2 |
|  |  | Fill with solvent to total | ml | 125 |
| Filter | room | Stirring mixer |  | 90 min. |
|  | room |  |  | 10 microns |
|  |  |  |  | 5 microns |
| Liquid Q.C. | room | Resistivity $\Omega$-cm |  | 330 |
|  |  | Specific gravity (density) | g/cm³ | 1.140 g/cm³ |
|  |  | Viscosity (76°F) (24.4°C) |  | $22.0 \times 10^{-3}$ Pa · s |
|  |  | pH |  | 6.25 |
|  |  | Surface tension dynes/cm |  | 41.7 |
| O.D. by draw down | room |  |  |  |

*(95% diethylene glycol), (5% $H_2O$)

+Pontamine Black SPL

**(Titrate dye and solvent with isopropanol to a surface tension of 40 dynes/cm)

The properties of the inks resulting from the foregoing ink formulation (Example II) have been demonstrated to be excellent for continous ink jet printing and, in addition, the KI—$I_2$ acts as a colorant and as a conductor to lower resistivity.

**Claims**

1. An ink composition useful in the ink jet printing of paper having an high starch content comprising a solution of iodine and potassium iodide in a solvent, a colourant also soluble in said solvent, and a viscosity enhancing and wetting agent.

2. An ink composition as claimed in Claim 1, wherein said solvent is water and said colourant is a water-soluble dyestuff.

3. An ink composition as claimed in Claim 2, comprising a mixture of 300 parts by volume of a solution of iodine and potassium iodide in water, 400 parts by volume of ethylene glycol as viscosity enhancing and wetting agent, and 300 parts by volume of the liquid water-soluble dye Pontamine Black SP-1, said composition having a viscosity of $6.3 \times 10^{-3}$ Pa · s and a resistivity of 100 ωcm.

4. An ink composition as claimed in Claim 3, wherein said solution contains 3.2% of iodine, 9.6% of potassium iodide and 87.2% of water, by weight.

5. An ink composition as claimed in Claim 1, wherein said solvent is a mixture of 95% by volume of diethylene glycol and 5% by volume of water, and said viscosity enhancing and wetting agent is isopropanol.

6. An ink composition as claimed in Claim 5, comprising a mixture of 80 ml of a mixture of 95% by volume diethylene glycol and 5% by volume water, 38 ml of Pontamine Black SP-1 dye, approximately 8 ml of isopropanol, 6 g of potassium iodide and 1.2 g of iodine, said composition having a viscosity of $22.0 \times 10^{-3}$ Pa · s and a resistivity of 330 Ωcm.

**Patentansprüche**

1. Tintenzusammenzetzung für das Tintenstrahlbedrucken von Papier mit hohem Stärkegehalt, umfassend eine Lösung von Jod und Kaliumjodid in einem Lösungsmittel, einen im Lösungsmittel ebenfalls löslichen Farbstoff und ein Viskositätsvergrößerungs- und Benetzungsmittel.

2. Tintenzusammensetzung nach Anspruch 1, worin das Lösungsmittel Wasser und der Farbstoff ein wasserlöslicher Farbstoff ist.

3. Tintenzusammensetzung nach Anspruch 2, umfassend eine Mischung von 300 Volumeteilen einer Lösung von Jod und Kaliumjodid in Wasser, 400 Volumenteilen Äthylenglykol als Viskositätsvergrößerungs- und Benetzungsmittel, und 300 Volumenteilen des flüssigen wasserlöslichen Farbstoffes Pontaminschwarz SP-1, wobei die Zusammensetzung eine Viskosität von $6,3 \times 10^{-3}$ Pa · s und einen spezifischen Widerstand von 100 Ωcm aufweist.

4. Tintenzusammensetzung nach Anspruch 3, worin die Lösung 3,2 Gew.-% Jod, 9,6 Gew.-% Kaliumjodid und 87,2 Gew.-% Wasser enthält.

5. Tintenzusammensetzung nach Anspruch 1, bei welcher das Lösungsmittel eine Mischung von 95 Vol.% Diäthylenglykol und 5 Vol.% Wasser ist und das Viskositätsvergrößerungs- und Benetzungsmittel Isopropanol ist.

6. Tintenzusammensetzung nach Anspruch 5, umfassend eine Mischung von 80 ml eines Gemisches von 95 Vol.% Diäthylenglykol und 5 Vol.% Wasser, 38 ml des Farbstoffes Pontaminschwarz SP-1, ungefähr 8 ml Isopropanol, 6 g Kaliumjodid und 1,2 g Jod, wobei die Zusammensetzung eine Viskosität von $22,0 \times 10^{-3}$ Pa · s und einen spezifischen Widerstand von 330 Ωcm aufweist.

**Revendications**

1. Composition d'encre destinée à l'impression par jets d'encre sur du papier ayant une forte teneur en amidon, composition caractérisée par une solution d'iode et d'iodure de potassium dans un solvant, un colorant également soluble dans ce solvant et un agent mouillant et augmentation la viscosité.

2. Composition d'encre selon la revendication 1, caractérisée en ce que le solvant est de l'eau et le colorant est une teinte soluble dans de l'eau.

3. Composition d'encre selon la revendication 2, caractérisée par un mélange de 300 parties en volume d'une solution d'iode et d'iodure de potassium dans le l'eau, 400 parties en volume d'éthylène glycol comme agent mouillant et augmentant la viscosité et 300 parties en volume d'une teinte liquide soluble dans de l'eau (noir Pontamine SP-1), cette composition ayant une viscosité de $6,3 \times 10^{-3}$ Pa · s et une résistivité de 100 Ω.cm.

4. Composition d'encre selon la revendication 3, caractérisée en ce que la solution contient 3,2% d'iode, 9,6% d'iodure de potassium et 87,2% d'eau, ces pourcentages étant des pourcentages pondéraux.

5. Composition d'encre selon la revendication 1, caractérisée en ce que le solvant est un mélange de 95% en volume de diéthylène glycol et de 5% en volume d'eau et l'agent mouillant et augmentant la viscosité, est l'isopropanol.

6. Composition d'encre selon la revendication 5, caractérisée par un mélange de 80 ml d'un mélange à 95% en volume de diéthylène glycol et de 5% en volume d'eau, 38 ml de la teinte noire Pontamine SP-1, approximativement 8 ml d'isopropanol, 6 g d'iodure de potassium et 1,2 g d'iode, cette composition ayant une viscosité de $22,0 \times 10^{-3}$ Pa · s et une résistivité de 330 Ω.cm.